(19) Europäisches Patentamt
European Patent Office
Office européen des brevets

(11) Veröffentlichungsnummer : **0 060 329**
**B1**

(12) # EUROPÄISCHE PATENTSCHRIFT

(45) Veröffentlichungstag der Patentschrift : **05.06.85**

(51) Int. Cl.⁴ : **G 02 F 1/133**

(21) Anmeldenummer : **81108937.4**

(22) Anmeldetag : **26.10.81**

(54) **Verfahren zur Herstellung von Orientierungsschichten für Flüssigkristalldisplays sowie Orientierungsschichten aufweisende Flüssigkristalldisplays.**

(30) Priorität : **27.02.81 DE 3107520**

(43) Veröffentlichungstag der Anmeldung : **22.09.82 Patentblatt 82/38**

(45) Bekanntmachung des Hinweises auf die Patenterteilung : **05.06.85 Patentblatt 85/23**

(84) Benannte Vertragsstaaten : **DE FR GB IT**

(56) Entgegenhaltungen :
**DE-A- 2 638 091**
**FR-A- 2 294 462**

(73) Patentinhaber : **Siemens Aktiengesellschaft**
**Berlin und München Wittelsbacherplatz 2**
**D-8000 München 2 (DE)**

(72) Erfinder : **Ahne, Hellmut, Dr. Dipl.-Chem.**
**Heidestrasse 6**
**D-8551 Röttenbach (DE)**
Erfinder : **Krüger, Hans, Dipl.-Phys.**
**Peralohstrasse 13**
**D-8000 München 83 (DE)**
Erfinder : **Rubner, Roland, Dr. Dipl.-Chem.**
**Buchenring 15**
**D-8551 Röttenbach (DE)**

**EP 0 060 329 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Orientierungsschichten für Flüssigkristalldisplays durch Aufbringen einer Lösung eines organischen Präpolymeren auf ein transparentes Substrat und nachfolgende Temperung sowie Orientierungsbehandlung und Flüssigkristalldisplays mit einer nach diesem Verfahren hergestellten Orientierungsschicht.

Bei Flüssigkristalldisplays (LCD) ist eine gleichmäßige Ausrichtung der Flüssigkristalle erforderlich. Deshalb werden auf die Elektroden sogenannte Orientierungsschichten aufgebracht. Die Herstellung der Orientierungsschichten kann beispielsweise durch eine Schrägbedampfung mit $SiO_x$ erfolgen. Dies ist aber ein aufwendiges und damit auch relativ teures Verfahren. Es ist daher bereits versucht worden, Orientierungsschichten aus organischen Materialien einzusetzen.

Außerdem ist bei Flüssigkristalldisplays eine gute Abdichtung erforderlich, um die Betriebssicherheit zu gewährleisten. Anstelle einer Verklebung wird deshalb, insbesondere bei hochwertigen Displays, eine Versiegelung mit Glaslot vorgenommen, einem niedrigschmelzenden Glas. Die Orientierungsschichten in Glaslot-Flüssigkristalldisplays müssen daher Temperaturen bis 400 °C und darüber widerstehen können, ohne daß ihre morphologische Struktur verändert wird.

Organische Orientierungsschichten für Flüssigkristallanzeigen oder -displays bestehen beispielsweise aus Polyvinylalkohol. Derartige Schichten weisen aber nur eine sehr begrenzte Wärmeformbeständigkeit auf. Bei erhöhten thermischen Anforderungen wird deshalb Polyimid verwendet. Wegen seiner Eigenfärbung kann Polyimid aber nur in geringen Schichtdicken eingesetzt werden. Da Orientierungsschichten auf Polyimidbasis darüber hinaus bei Temperaturen $\geqslant$ 420 °C eine unzureichende Wärmeformbeständigkeit aufweisen, sind sie für hochwertige, mit Glaslot verschmolzene Flüssigkristalldisplays wenig geeignet, weil — beim Verschmelzen des Glaslots — die Strukturierung der Polyimidschichten und damit die Orientierung der Flüssigkristalle im Display verloren geht.

Die Orientierungsschichten aus Polyimid werden im übrigen in der Weise hergestellt, daß eine Polyamidocarbonsäure in einem Lösungsmittel gelöst und auf die Elektrodenschicht bzw. die Elektrodenbasisplatte aufgetragen wird. Nach dem Beschichten wird der Filmüberzug auf höhere Temperaturen erhitzt, d. h. getempert, wodurch aus der Polyamidocarbonsäure, d. h. dem Präpolymeren, das Polyimid gebildet wird. Daran schließt sich dann die Orientierungsbehandlung des Polyimidharzfilmes an (vgl. dazu DE-AS 26 38 091).

Aufgabe der Erfindung ist es, ein Verfahren der eingangs genannten Art in der Weise auszugestalten, daß die Herstellung von organischen Orientierungsschichten für Flüssigkristalldisplays ermöglicht wird, die thermisch hoch belastbar und auch bei Temperaturen $\geqslant$ 420 °C formstabil sind, d. h. keiner Veränderung der morphologischen Struktur unterliegen.

Dies wird erfindungsgemäß dadurch erreicht, daß Präpolymere von Polychinazolindionen verwendet werden.

Präpolymere der genannten Art weisen eine hohe thermische Beständigkeit (bis zu 500 °C) auf. Neben einer hohen Transparenz der Filme und einer geringen Eigenfärbung, die sich auch bei hohen thermischen Belastungen nur unwesentlich ändert, zeichnen sich die nach dem erfindungsgemäßen Verfahren hergestellten Orientierungsschichten durch eine hohe Wärmebeständigkeit bzw. Wärmeformbeständigkeit aus, die überraschenderweise auch bei Temperaturen $\geqslant$ 420 °C zu keiner Veränderung selbst feinster morphologischer Strukturen führt. Nach dem erfindungsgemäßen Verfahren können somit Orientierungsschichten in Form von sogenannten Reibeschichten hergestellt werden. Damit kann auch bei der Herstellung hochwertiger Glaslot-Flüssigkristalldisplays auf die kostenaufwendige Schrägbedampfung verzichtet und die kostengünstigere Reibetechnik eingesetzt werden. Die hohe Transparenz und die geringe Eigenfärbung der nach dem erfindungsgemäßen Verfahren hergestellten Orientierungsschichten erlaubt darüber hinaus höhere Schichtdicken, so daß diese Schichten eine zusätzliche Schutz- bzw. Vergütungsfunktion übernehmen können.

Die beim erfindungsgemäßen Verfahren eingesetzten Polychinazolindion-Präpolymeren weisen im allgemeinen folgende Struktur auf :

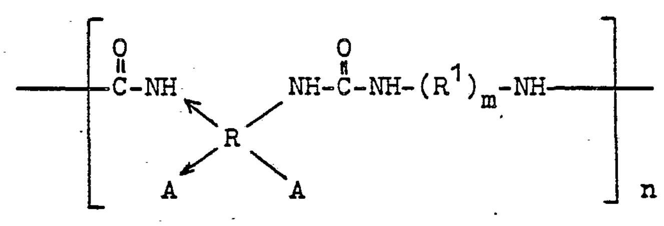

Dabei soll mit den in der Formel enthaltenen Pfeilen die Tatsache zum Ausdruck gebracht werden, daß die beiden fraglichen Substituenten an R ihre Stellung vertauschen können. Dies ist deshalb von Bedeutung, weil es sich bei R, wie nachfolgend noch erläutert wird, um einen cyclischen Rest handelt.

In der Formel bedeutet n eine ganze Zahl von 2 bis etwa 100 ; m ist 0 oder 1.

Für die Reste R, $R^1$ und A gilt folgendes :

R ist ein — gegebenenfalls halogenierter — zumindest partiell aromatischer und/oder heterocyclischer tetravalenter, d. h. tetrafunktioneller Rest, bei dem jeweils zwei Valenzen in Nachbarstellung zueinander angeordnet sind ; weist der Rest R mehrere aromatische und/oder heterocyclische Strukturelemente auf, so befinden sich die Valenzpaare jeweils an endständigen derartigen Strukturelementen ;

$R^1$ ist ein — gegebenenfalls halogenierter — divalenter, d. h. difunktioneller Rest aliphatischer und/oder cycloaliphatischer, gegebenenfalls Heteroatome aufweisender, und/oder aromatischer und/oder heterocyclischer Struktur ;

A bedeutet

$$-COOH, \quad -COOCH_2-\underset{\displaystyle D}{\underset{|}{C}}H-R^3 \quad \text{oder} \quad -COOR^4,$$

wobei $R^3$ ein olefinisch ungesättigter Rest, insbesondere eine — gegebenenfalls substituierte — (meth)acrylesterhaltige Gruppe, und $R^4$ ein aliphatischer, cycloaliphatischer, heterocyclischer oder aromatischer Rest ist und für D folgendes gilt :

$$D = -H, \quad -OH \quad \text{oder} \quad -O-\underset{\displaystyle O}{\underset{\|}{C}}-R^5-CCOH,$$

wobei $R^5$ ein olefinisch ungesättigter, aromatischer, aliphatischer oder cycloaliphatischer Rest ist.

Die Reste R, $R^1$, $R^3$, $R^4$ und $R^5$ haben insbesondere folgende Bedeutung :

R = 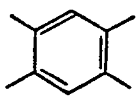 , 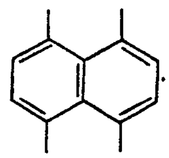 , 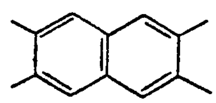 ,

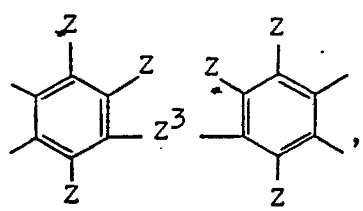 , 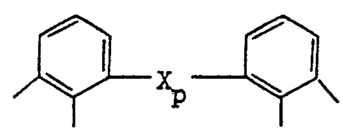 ,

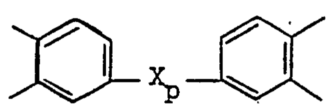 , 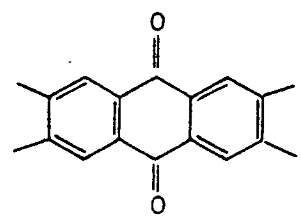 ,

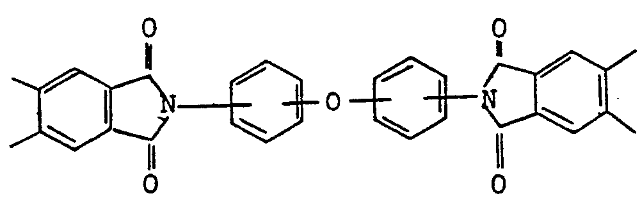 ,

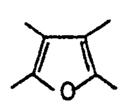 und 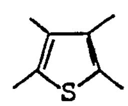 ,

wobei p = 0 oder 1 ist und X für einen der folgenden Reste steht :

$$X = -O-, \quad -\underset{\displaystyle O}{\underset{\|}{C}}-\underset{\displaystyle O}{\underset{\|}{C}}-, \quad >CO, \quad -\underset{\displaystyle O}{\underset{\|}{C}}-O-, \quad -\overset{\displaystyle O}{\overset{\|}{C}}-\overset{\displaystyle Z}{\overset{|}{N}}-, \quad -\overset{\displaystyle Z^1}{\overset{|}{N}}-, \quad -\overset{\displaystyle O}{\overset{\|}{C}}-\overset{\displaystyle Z^2}{\overset{|}{N}}-,$$

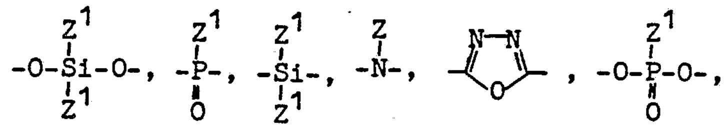

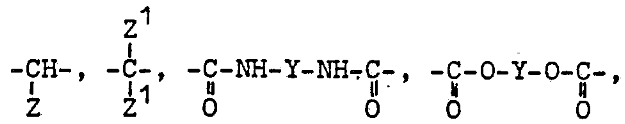 , -SO-,

$-SO_2-$, $-SO_2NH-$, -S-, 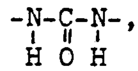 , -N=N-,

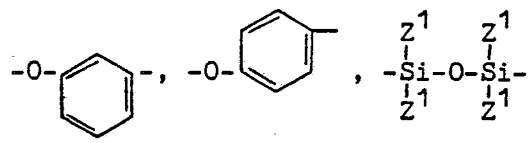 und

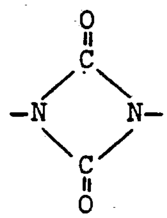

Für die weiteren Reste gilt :

Y = 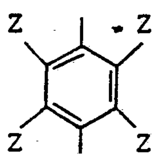 , $-(CH_2)_o-$ mit 0 = 2 bis 10, und

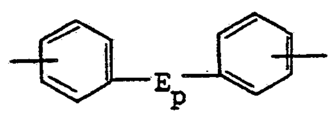 mit p = 0 oder 1 ;

Z = H oder Alkyl mit 1 bis 6 Kohlenstoffatomen ;
$Z^1$ = Alkyl mit 1 bis 10 Kohlenstoffatomen oder Aryl ;
$Z^2$ = Aryl oder Heteroaryl ;

$Z^3$ = 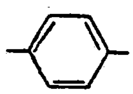 oder 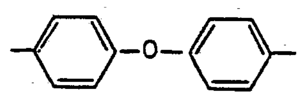 ; und

E = 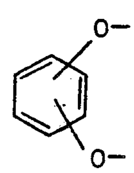 , 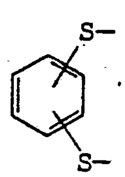 , 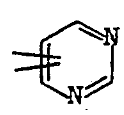 , 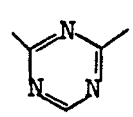 ,

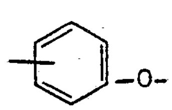 , 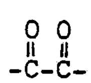 , 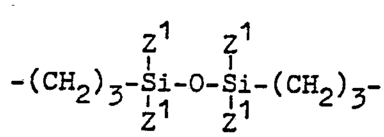 ,

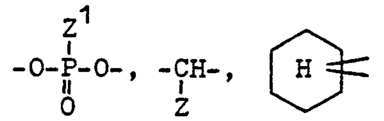 , $-(CH_2)_q-$, $-(CF_2)_r-$,

$-SO-$, $-SO_2-$, 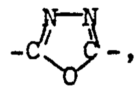 , $-SO_2NH-$, 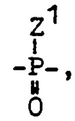 ,

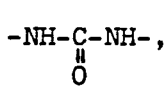 , 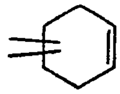 , $-N{=}N-$, 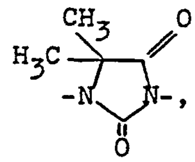 ,

$-S-$, $-O-$, 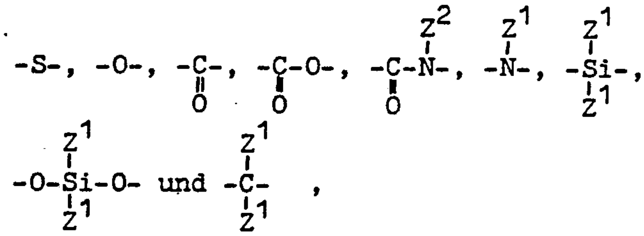 ,

wobei q = 2 bis 14 und r = 2 bis 18, und Z, Z¹ und Z² wie vorstehend definiert sind.

$R^1$ = 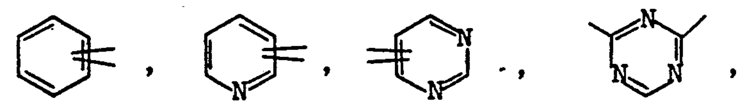

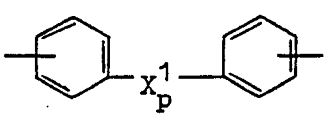 , 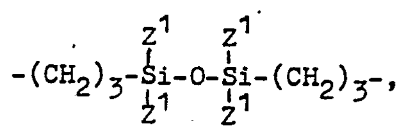

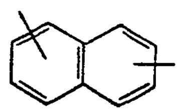 , 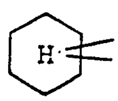 , $-(CH_2)_q-$, $-(CF_2)_r-$,

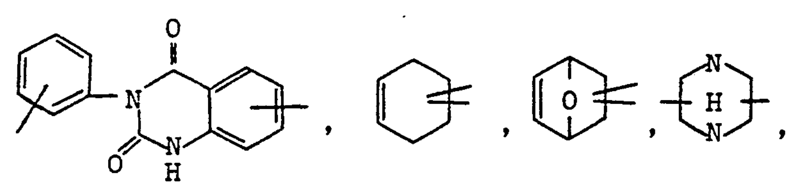

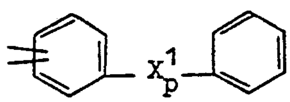 oder 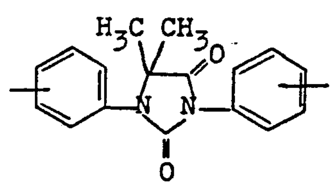 ,

wobei p = 0 oder 1, q = 2 bis 14 und r = 2 bis 18, und Z¹ wie vorstehend definiert ist ;

$X^1$ = 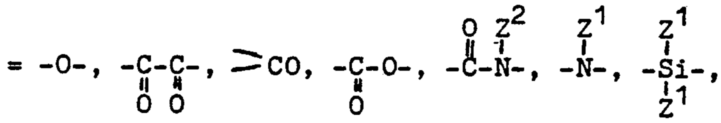

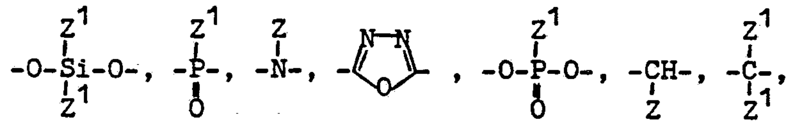

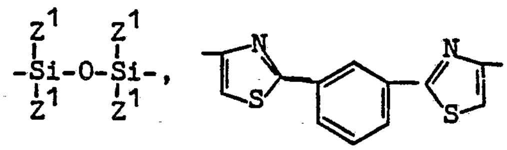 und

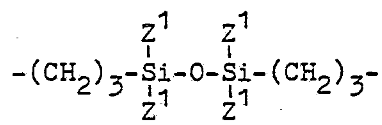

wobei Z, $Z^1$ und $Z^2$ wie vorstehend definiert sind.

$R^3$ = 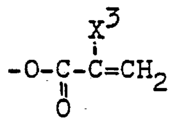 oder 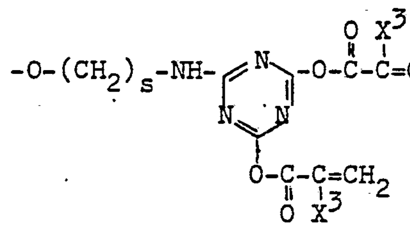 ;

dabei ist s = 2 bis 16 und für $X^3$ gilt:

$$X^3 = -H,\ -CH_3,\ -Cl,\ -Br \text{ oder } -C{\equiv}N.$$

$R^4$ = $-CH_3$, $-(CH_2)_t-CH_3$, $-CH_2-CH=CH_2$, $-CH_2-$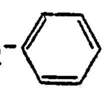, 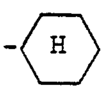

oder $-CH_2-$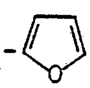,

wobei t = 1 bis 17.

$R^5$ = $-CH=CH-$, 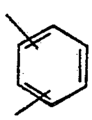, $-(CH_2)_r-$, 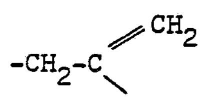 oder 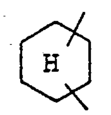,

wobei r = 2 bis 18.

Verbindungen der vorstehend genannten Art sind — an sich — beispielsweise in der deutschen Offenlegungsschrift 29 33 826 beschrieben. Bei den Polychinazolindion-Präpolymeren handelt es sich dabei um Additionsprodukte olefinisch ungesättigter Monoepoxide an carboxylgruppenhaltige Polyadditionsprodukte aus aromatischen und/oder heterocyclischen Diaminodicarbonsäuren und Diisocyanaten.

Flüssigkristalldisplays nach der Erfindung sind dadurch gekennzeichnet, daß sie Orientierungsschichten aus Polychinazolindion aufweisen. Die Orientierungsschichten sind dabei jeweils aus entsprechenden Polymervorstufen, sogenannten Präpolymeren, hergestellt. Die Polymerschichten, die in einer bestimmten Richtung orientiert sind, befinden sich auf den Elektroden bzw. Elektrodenschichten und können zum Teil auch die Elektrodenbasisplatten (Trägerplatten) bedecken.

Von Vorteil ist es, wenn beim erfindungsgemäßen Verfahren Präpolymere eingesetzt werden, die beim Tempern einen hohen Anteil an flüchtigen Produkten abgeben. Auf diese Weise kann nämlich eine Reduzierung der Schichtdicke erreicht werden, und zwar bis zu 40 % und darüber, d. h. es können sehr dünne Schichten hergestellt werden. Obwohl sich auf diese Weise Schichtstärken ≤ 0,02 µm ergeben, weisen derartige Schichten einen homogenen Charakter auf.

Zur Verminderung der Schichtdicke können ferner der Präpolymerenlösung Monomere, Oligomere und/oder Polymere zugesetzt werden, welche bei Temperaturen ≥ 250 °C, d. h. beim Temperprozeß, zumindest teilweise verflüchtigt werden. Geeignete Zusätze sind beispielsweise Diazochinone (o-Chinon- und o-Naphthochinondiazide), ferner oligomere Ester und Ether mit aliphatischen oder cycloaliphatischen Strukturelementen sowie polymere Verbindungen, wie Polymethylmethacrylat und Polyolefinsulfone.

Anhand eines Ausführungsbeispiels und einer Figur, in der eine Ausführungsform eines erfindungsgemäßen Flüssigkristalldisplays dargestellt ist, soll die Erfindung noch näher erläutert werden.

Beispiel

Orientierungsschichten aus Polychinazolindion

Zur Herstellung eines Polychinazolindion-Präpolymeren werden 5,6 Gewichtsteile 4.4'-Diaminodiphenylmethan-3.3'-dicarbonsäurediallylester in 30 Volumenteilen N-Methylpyrrolidon gelöst und mit 1 Gewichtsteil Triethylamin versetzt. Zu der dabei erhaltenen Mischung werden unter Eiskühlung und Rühren 3,8 Gewichtsteile 4.4'-Diphenylmethandiisocyanat in 10 Volumenteilen N-Methylpyrrolidon zugegeben, anschließend wird über Nacht bei Raumtemperatur weitergerührt. Dann wird die Lösung zu 700 Volumenteilen Isopropanol getropft und das ausgefallene Präpolymere getrocknet.

Der 4.4'-Diaminodiphenylmethan-3.3'-dicarbonsäurediallylester wird im übrigen in folgender Weise hergestellt : 177 Gewichtsteile Anthranilsäureallylester, der durch Umsetzung von Isatinsäureanhydrid mit Allylalkohol hergestellt wird, werden in 350 Volumenteilen Ethanol gelöst und tropfenweise mit 85 Volumenteilen 35 %iger wäßriger Formaldehydlösung versetzt, dann wird 30 Minuten auf ca. 60 °C erhitzt. Bei der nachfolgenden Kühlung mit Eis scheidet sich Methylendianthranilsäureallylester in kristalliner Form ab. 45,2 Gewichtsteile des Methylendianthranilsäureallylesters werden in 90 Volumenteilen Dioxan gelöst und bei 50 °C unter Rühren tropfenweise mit konz. HCl versetzt, anschließend wird noch 3 Stunden bei ca. 50 °C weitergerührt. Beim Abkühlen kristallisiert 4.4'-Diaminodiphenylmethan-3.3'-dicarbonsäureallylester-Hydrochlorid aus, das abfiltriert und mit Isopropanol gewaschen wird. Aus dem Hydrochlorid wird dann der 4.4'-Diaminodiphenylmethan-3.3'-dicarbonsäureallylester mittels Ammoniak freigesetzt.

Die mit den Elektroden versehenen Trägerplatten werden im Roller-Coating-Verfahren mit einer 12 %igen Lösung des Polychinazolindion-Präpolymeren in N-Methylpyrrolidon, welche — als Haftvermittler — 1 % Vinyltriethoxysilan enthält, bezogen auf das Festharz, beschichtet. Der dabei erhaltene Filmüberzug wird 1 Stunde bei ca. 90 °C getrocknet und anschließend, jeweils 1/2 Stunde lang, bei ca. 300 °C und ca. 400 °C getempert. Nachfolgend werden auf den Oberflächen der Polychinazolindion-Schichten durch Reiben mit einer Bürste in einer bestimmten Richtung gut orientierende Reibeschichten erzeugt. Dann werden die beschichteten Trägerplatten bei einer Temperatur von ca. 470 °C mittels Glaslot miteinander verbunden. Auch nach dieser thermischen Behandlung werden die Flüssigkristalle der Displays gut orientiert, d. h. die Orientierungsqualität wird nicht beeinträchtigt.

In der Figur ist — in einem schematischen Seitenschnitt — eine Ausführungsform eines erfindungsgemäßen Displays 10 dargestellt, und zwar eine 7-Segment-Flüssigkristallanzeige. Das Display 10 weist eine vordere Trägerplatte 11 und eine hintere Trägerplatte 12 auf. Die beiden Trägerplatten sind in ihren Randzonen mittels Glaslot hermetisch dicht miteinander verbunden, wobei gleichzeitig eine Art Rahmen 13 gebildet wird. Im Raum zwischen den durch den Rahmen 13 getrennten Trägerplatten 11 und 12 befinden sich die Flüssigkristalle 14. Auf den einander zugewandten Oberflächen der beiden Trägerplatten sind Elektroden bzw. Elektrodenschichten 15 und 16 in Form elektrisch leitender Beläge angebracht. Die Vorderelektroden 15 sowie die freie Oberfläche der Trägerplatte 11 sind von einer Orientierungsschicht 17 überzogen, auf der Rückelektrode 16 befindet sich eine Orientierungsschicht 18. Die Orientierungsschichten 17 und 18 bestehen aus Polychinazolindion.

Auf den einander abgewandten Seiten sind die Trägerplatten 11 und 12 mit je einem Linearpolarisator 19 bzw. 20 versehen, wobei der hintere Polarisator zum vorderen gekreuzt angeordnet ist. Am hinteren Linearpolarisator 20 ist schließlich noch ein Reflektor 21 angeordnet. Das Flüssigkristalldisplay 10 arbeitet nach dem Prinzip der sogenannten Drehzelle, die beispielsweise in der DE-AS 21 58 563 im einzelnen beschrieben ist.

**Patentansprüche**

1. Verfahren zur Herstellung von Orientierungsschichten für Flüssigkristalldisplays durch Aufbringen einer Lösung eines organischen Präpolymeren auf ein transparentes Substrat und nachfolgende Temperung sowie Orientierungsbehandlung, dadurch gekennzeichnet, daß Präpolymere von Polychinazolindionen verwendet werden.

2. Verfahren nach Anspruch 1, dadurch gekennzeichnet, daß Präpolymere verwendet werden, die beim Tempern einen hohen Anteil an flüchtigen Produkten abgeben.

3. Verfahren nach Anspruch 1 oder 2, dadurch gekennzeichnet, daß der Präpolymerenlösung Monomere, Oligomere und/oder Polymere zugesetzt werden, welche bei Temperaturen $\geq 250$ °C zumindest teilweise verflüchtigt werden.

4. Verfahren nach einem der Ansprüche 1 bis 3, dadurch gekennzeichnet, daß der Präpolymerenlösung ein Silan zugesetzt wird.

5. Flüssigkristalldisplay, gekennzeichnet durch eine nach dem Verfahren nach einem der Ansprüche 1 bis 4 hergestellte Orientierungsschicht aus Polychinazolindion.

## Claims

1. A process for the production of orientation layers for liquid crystal displays by the application of a solution of an organic prepolymer onto a transparent substrate and subsequent annealing and orientation treatment, characterised in that prepolymers of polyquinazolinediones are used.

2. A process as claimed in Claim 1, characterised in that prepolymers are used which give off a high proportion of volatile products.

3. A process as claimed in Claim 1 or Claim 2, characterised in that monomers, oligomers and/or polymers, which are at least partially volatilized at temperature ⩾ 250 °C, are added to the prepolymer solution.

4. A process as claimed in one of Claims 1 to 3, characterised in that a silane is added to the prepolymer solution.

5. A liquid crystal display, characterised by an orientation layer of polyquinazolinedione which is produced by the process as claimed in one of Claims 1 to 4.

## Revendications

1. Procédé de préparation de couches d'orientation pour des dispositifs d'affichage à cristaux liquides, par dépôt d'une solution d'un prépolymère organique sur un substrat transparent, suivi d'un recuit, ainsi que d'un traitement d'orientation, caractérisé en ce qu'il consiste à utiliser des prépolymères de polyquinazolinedione.

2. Procédé suivant la revendication 1, caractérisé en ce qu'il consiste à utiliser des prépolymères qui, au recuit, dégagent une grande proportion de produits volatils.

3. Procédé suivant la revendication 1 ou 2, caractérisé en ce qu'il consiste à ajouter à la solution de prépolymère, des monomères, des oligomères et/ou des polymères qui se volatilisent au moins partiellement, à des températures supérieures ou égales à 250 °C.

4. Procédé suivant l'une des revendications 1 à 3, caractérisé en ce qu'il consiste à ajouter à la solution de prépolymère un silane.

5. Dispositif d'affichage à cristaux liquides, caractérisé par une couche d'orientation en polyquinazolinedione préparée par le procédé suivant l'une des revendications 1 à 4.

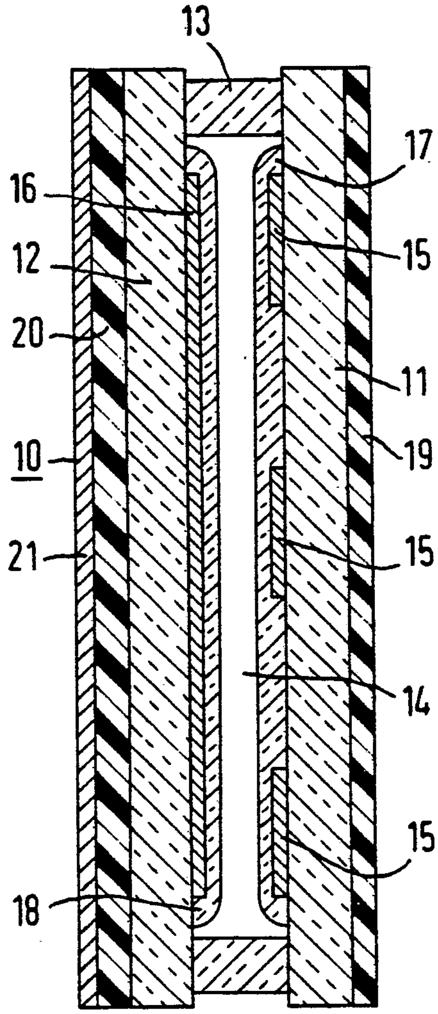
13
17
16
15
12
20
11
10
19
21
15
14
15
18